# EUROPEAN PATENT APPLICATION

(11) **EP 2 573 051 A2**
(43) Date of publication of application: **27.03.2013**
(21) Application number: 11783686.6
(22) Date of filing: 06.04.2011
(51) Int. Cl.: C02F 1/461, C25B 9/06

(54) **APPARATUS FOR PRODUCING ION WATER**

(30) Priority: 17.05.2010 KR 20100045881
(71) Applicant: Ionfarms Co., Ltd., Incheon 403-030 (KR)
(72) Inventor: SIN, Jong-Ho, Seongnam-si Gyeonggi-do 462-242 (KR)
(74) Representative: Chamberlain, Alan James
(86) International application number: PCT/KR2011/002343
(87) International publication number: WO 2011/145804

(57) **Abstract**

The present invention relates to an apparatus for producing on water. In particular, the apparatus for producing ion water may have a simplified structure to prevent water from being lost and also prevent an electrode and ion diaphragm from being damaged. In addition, the apparatus for producing ion water may selectively supply alkaline water and acidic water as necessary. The apparatus for producing ion water include an ionized electrolytic cell configured to contact raw water only with one electrode part disposed on one or more inner walls of the ionized electrolytic cell to contact the raw water only with one electrode of the anode and cathode, an ion water control part for controlling the ionized electrode part according to the discharge of the ion water, and a manipulation part for inputting a manipulation signal from a user to the ion water control part. Thus, in the apparatus for producing ion water, the ion water may be produced using one electrolytic ell to minimize the loss of the raw water. Also, since the user may selectively use the ion water as necessary, the functionality thereof may be improved.

## Description

### Technical Field

The present invention relates to an apparatus for producing ion water, and in particular to an apparatus for producing ion water which comprises an ionization electrolysis cell which has a certain volume for the purpose of ionizing raw water supplied thereto; an ionization electrode part which is provided at one side of the ionization electrolysis cell and of which either an anode or a cathode comes into direct contact with the raw water; an ion water control part which controls the ionization electrode part depending on the discharge of the ion water; and a manipulation part which inputs a user's manipulation signal to the ion water control part, so the construction of the ion water producing apparatus is simplified, and the loss of water is prevented, the damages of the electrode and the ion partitions due to the dissolved solid substance can be prevented, and a user can selectively use alkaline water or acidic water.

### Background Art

The apparatus for producing ion water is characterized in that alkaline water and acidic water are produced by means of electrolysis procedure using raw water.

The above apparatus for producing ion water is formed of two electrolysis cells separated by an ion partition allowing only ions to pass through, and an electrolysis electrode disposed at each electrolysis cell.

The conventional apparatus for producing ion water with the above-mentioned features is directed to selectively using alkaline water or acidic water depending on a user's necessity, and most of the non-selected alkaline water or acidic water is discharged, which results in a problem that water is over consumed.

Dissolved solid substances such as calcium, magnesium, etc. contained in water might attach on the electrodes during the ionization procedure of raw water or ion partitions might be clogged and damaged.

### Disclosure of Invention

Accordingly, it is an object of the present invention to provide an apparatus for producing ion water which makes it possible to resolve the problems encountered in the conventional art in which the conventional apparatus for producing ion water with the above-mentioned features is directed to selectively using alkaline water or acidic water depending on a user's necessity, and most of the non-selected alkaline water or acidic water is discharged, which results in a problem that water is over consumed. In addition, dissolved solid substances might damage the electrodes and the ion partitions.

To achieve the above objects, there is provided an apparatus for producing ion water which comprises an ionization electrolysis cell which has a certain volume for the purpose of ionizing raw water supplied thereto; an ionization electrode part which is provided at one side of the ionization electrolysis cell and of which either an anode or a cathode comes into direct contact with the raw water; an ion water control part which controls the ionization electrode part depending on the discharge of the ion water; and a manipulation part which inputs a user's manipulation signal to the ion water control part.

### Advantageous effects

The present invention is characterized in that ion water can be produced using one electrolysis cell in an apparatus for producing ion water, thus minimizing the loss of raw water, and the ion water can be used depending on a user's selection, thus enhancing functionality.

### Brief Description of Drawings

The present invention will become better understood with reference to the accompanying drawings which are given only by way of illustration and thus are not limitative of the present invention, wherein;

Figure 1 is a disassembled perspective view of an embodiment of the present invention.

Figure 2 is a perspective view illustrating an engagement according to an embodiment of the present invention.

Figure 3 is a cross sectional view of an embodiment of the present invention.

Figure 4 is a cross sectional view illustrating a construction that an ionization electrode part is dispose at both sides according to an embodiment of the present invention.

Figure 5 is a cross sectional view illustrating a construction that an insulated coating layer is formed on a surface of an outer contact electrode of an ionization electrode part according to an embodiment of the present invention.

Figure 6 is a cross sectional view illustrating a construction that an ozone degradation part is implanted using an ozone degradation catalyst according to another embodiment of the present invention.

Figure 7 is a cross sectional view illustrating a construction that an ozone degradation part is implemented using an active carbon according to another embodiment of the present invention.

Figure 8 is a cross sectional view illustrating a construction that an ozone degradation part is implemented using an ultraviolet ray emitter according to another embodiment of the present invention.

Figure 9 is a perspective view illustrating a construction that an ionization electrolysis cell is implemented in a circular plate shape according to an embodiment of the present invention.

Figure 10 is a perspective view illustrating a construction that an ionization electrolysis cell is implemented in a cylindrical shape according to an embodiment of the present invention.

### Best Modes for carrying out the invention

The preferred embodiments of the present invention will be described in details with reference to the accompanying drawings.

The present invention is basically directed to preventing the damages of an electrode and an ion partition due to a dissolved solid substance contained in raw water while minimizing the loss of raw water during the manufacture of ion water.

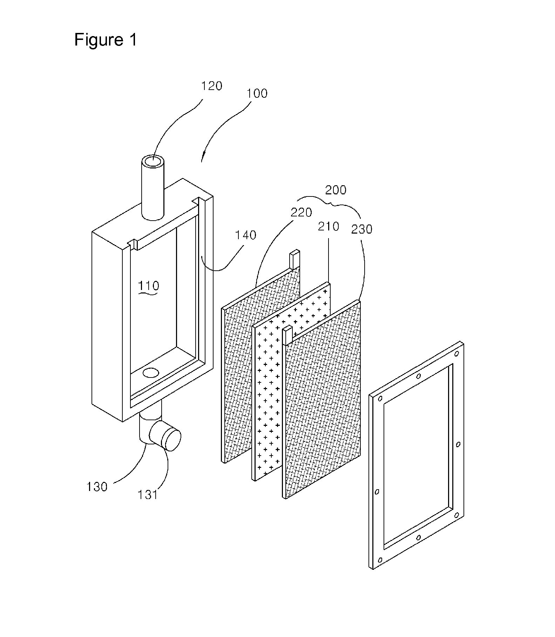

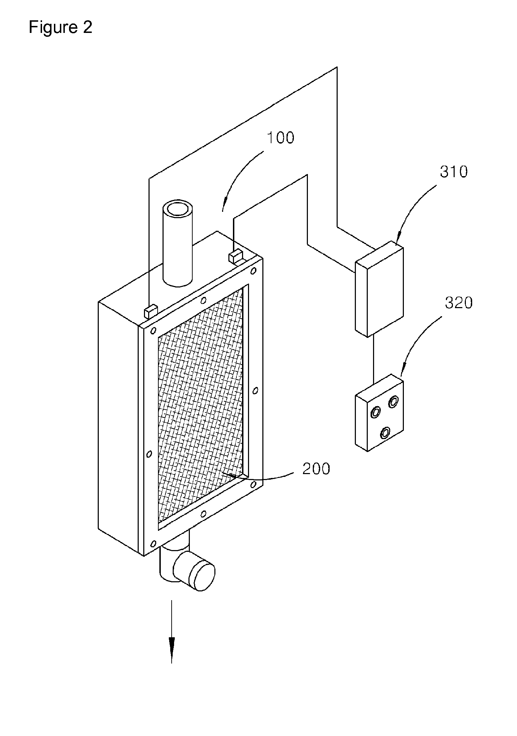

As shown in Figures 1 and 2, the present invention is characterized in that the apparatus for producing ion water comprises an ionization electrolysis cell 100 which has a certain volume for the purpose of ionizing raw water supplied thereto; an ionization electrode part 200 which is provided at one side of the ionization electrolysis cell 100 and of which either an anode or a cathode comes into direct contact with the raw water; an ion water control part 310 which controls the ionization electrode part 310 depending on the discharge of the ion water; and a manipulation part 320 which inputs a user's manipulation signal to the ion water control part 310.

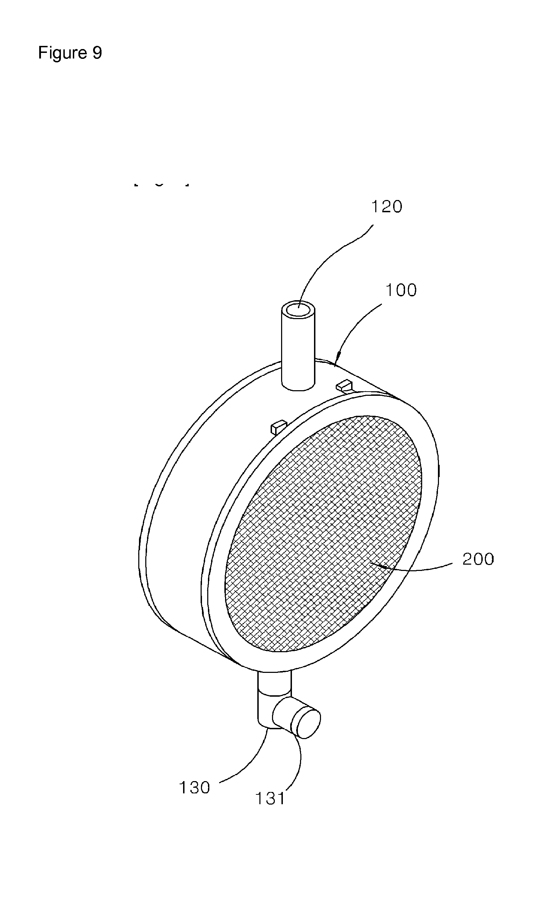

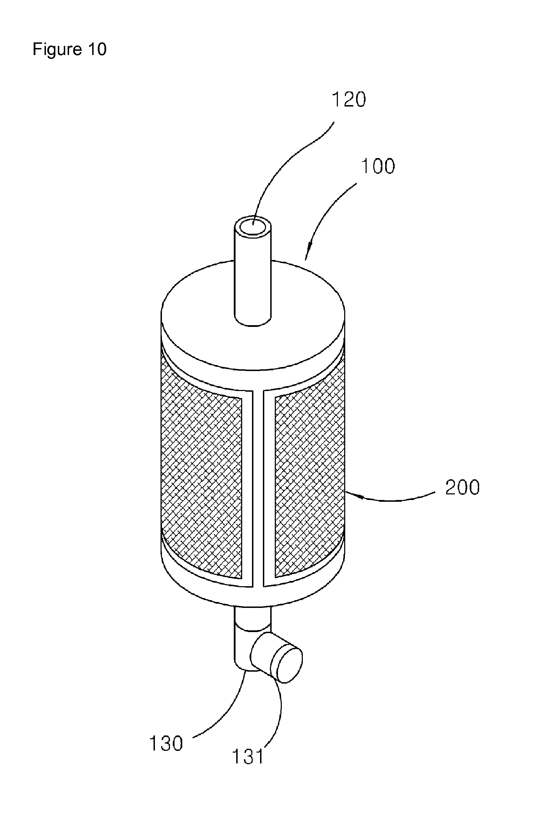

As shown in Figure, the ionization electrolysis cell 100 comprises an ionization chamber 110 having a certain volume, a raw water inlet tube 120 for receiving raw water via its one side, an ion water discharge tube 130 disposed at an opposite direction of the raw water inlet tube for thereby discharging ionized ion water, and an electrode installation part 140 in which an ionization electrode part 200 is installed, with its outer surface being exposed, at one side surface in the flowing direction of the raw water from the raw water inlet tube 120 of the ionization chamber 110 to the ion water discharge tube 130. Here, the ionization electrolysis cell might be formed in one shape selected from the shapes of a rectangular box shape or a polygonal plate shape as shown in Figure 1, a circular plate shape as shown in Figure 9 and a cylindrical shape as shown in Figure 10.

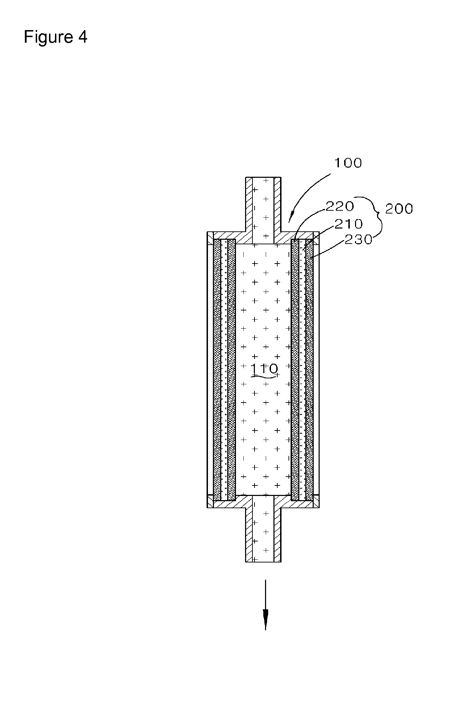

As shown in Figure 4, the electrode installation part 140 might be installed at both sides in an attempt to enhance the ionization of raw water.

In addition, there might be provided a discharge valve 131 at the ion water discharge tube 130 for the purpose of controlling the discharge of ion water. The discharge valve might be formed of a manual valve or an automatic valve controlled by means of the ion water control part 310.

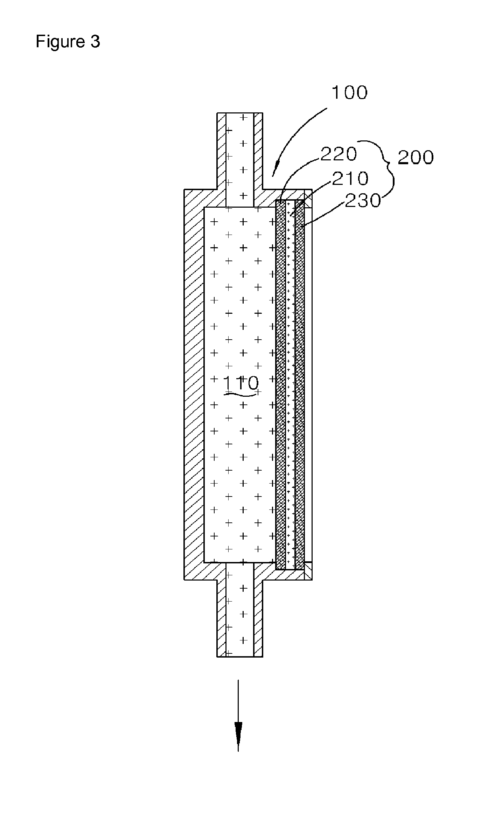

As shown in Figures 1 and 3, the ionization electrode part 200 is formed of a raw water contact electrode 220 which is engaged in such away to come into close contact with one side of the ion partition 210 formed of either the proton exchange membrane or the polymer electrolyte membrane which pass only ion substances, so the raw water contact electrode 220 comes into contact with the raw water and pass only the ion substances; and an externally exposed electrode 230 which is engaged in such a way to come close contact with the ion partition 210 at the opposite side of the raw water contact electrode 200 and is externally exposed and is constituted to pass only oxygen and ozone or hydrogen gas which are produced during the ionization.

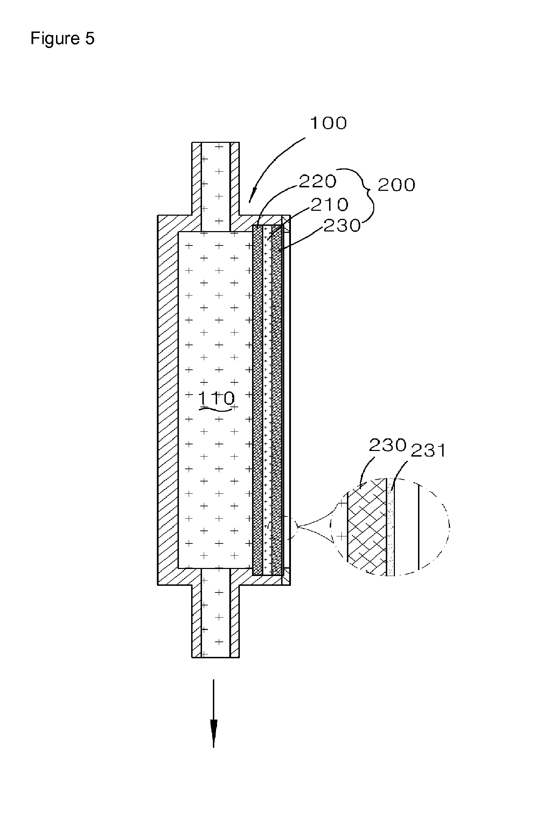

The raw water contact electrode 220 and the externally exposed electrode 230 might be implemented by selecting one between a net shaped plate and a porous plate. As shown in Figure 5, an insulated coating layer 231 might be formed at an outer surface of the externally exposed electrode 230, which does not come into contact with the raw water, thus preventing oxidation and electric leakage.

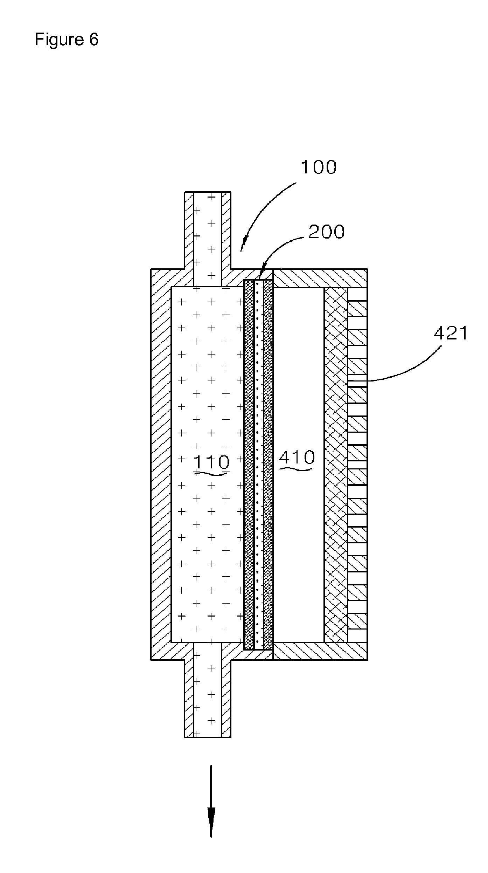

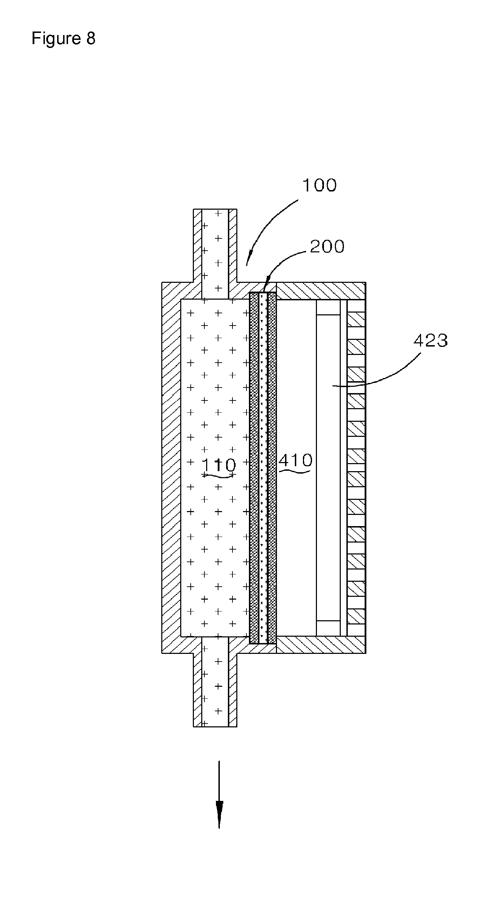

When ion water is formed of alkaline water in the embodiment of the present invention, as shown in Figures 6 through 8, an ozone degradation camber 410 is disposed at one side of the externally exposed electrode 230 for the purpose of degrading ozone with oxygen, the ozone being contained in oxygen discharged via the externally exposed electrode 230, and the ozone degradation part is provided at the ozone degradation chamber 410 for the same purpose.

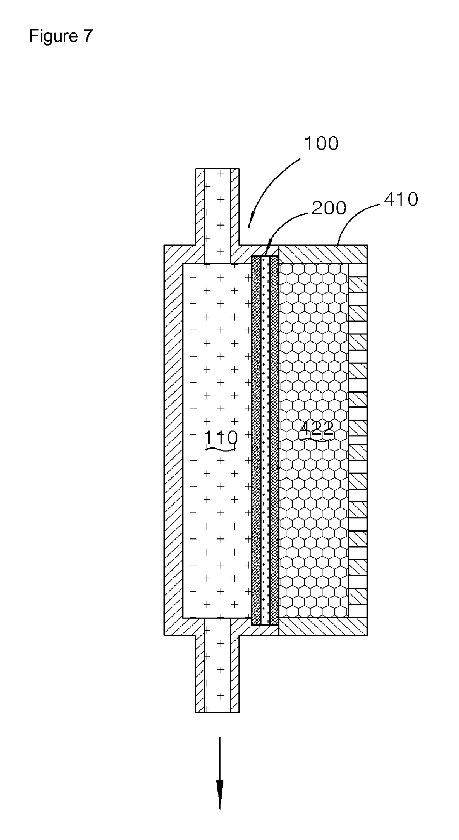

The ozone degradation part might be formed of one among an ozone degradation catalyst 421 formed of manganese oxide and lead compound as shown in Figure 6, an active carbon 422 which adsorbs ozone, thus naturally degrading the same as shown in Figure 7, and an ultraviolet way emitter 423 which emits ultraviolet way having a wavelength of 184.9nm enough to degrade ozone.

The operations of the present invention will be described.

In the apparatus for producing ion water which comprises an ionization electrolysis cell 100 which has a certain volume for the purpose of ionizing raw water supplied thereto; an ionization electrode part 200 which is provided at one side of the ionization electrolysis cell 100 and of which either an anode or a cathode comes into direct contact with the raw water; an ion water control part 310 which controls the ionization electrode part 310 depending on the discharge of the ion water; and a manipulation part 320 which inputs a user's manipulation signal to the ion water control part 310, when a wants to use alkaline water according to the present invention, a manipulation signal is inputted so that the ion water control part 310 allows the raw water contact electrode 220 of the ionization electrode part 200 to be cathode by operating the manipulation part 320.

When the user inputs a manipulation signal by handling the manipulation part 320, raw water is electrolysis-processed by means of the ionization electrode part 200, thus ionizing the raw water.

The oxygen ions ionized to negative ions contained in the raw water ionized by means of the ionization electrode part 200 pass through the ion partition 210 and moves to the externally exposed electrode 230, thus emitting electrons which becomes oxygen and is discharged into the air, and the hydrogen ions contained in the raw water take electrons from the raw water-exposed electrode 220 and change to active carbon, so the raw water changes to alkaline water as the concentration of the hydroxyl ion increases.

An ozone degradation chamber 410 is formed at the externally exposed electrode in another embodiment of the present invention, and an ozone degradation part is provided. In this embodiment of the present invention, the ozone contained in the oxygen emitted to the externally exposed electrode 230 during the production of the alkaline water is degraded, thus enhancing safety now what the ozone might provide bad influences.

In the course of producing alkaline water according to the present invention, oxygen gas contains a small amount of ozone, which might be used for the purpose of sterilization.

When it is planned to produce acidic water according to the present invention, the manipulation part 320 is handled, and the ion water control part 310 is so controlled that the raw water contact electrode 220 of the ionization electrode part 200 becomes an anode. When a manipulation signal is inputted, the raw water contact electrode 220 with an anode continues to generate hydrogen ion and oxygen in the raw water, and part of the hydrogen ion generated by means of the raw water contact electrode 220 passes through the ion partition 210 and moves to the externally exposed electrode 230 and is converted into hydrogen and is emitted into the air. The raw water has an increased hydrogen ion concentration and becomes acidic water and is discharged via the ion water discharge tube 130. Here the acidic water might be used for the purpose of beauty like a face wash and the purpose of cleaning during sterilization and disinfection.

### Industrial applicability

As described above, the ion water is produced by means of one electrolysis cell in an apparatus for producing ion water according to the present invention, thus minimizing the loss of raw water, and the ion water can be selectively used depending on a user's selection, so the functionality is enhanced.

The ionization efficiency of the raw water is enhanced by providing an ionization electrode part at both sides of an ionization electrolysis cell according to another embodiment of the present invention.

It is possible to prevent harmful things from happening by degrading a small amount of ozone which might occur during a production procedure of alkaline water by providing an ozone degradation part.
As the present invention may be embodied in several forms without departing from the spirit or essential characteristics thereof, it should also be understood that the above-described examples are not limited by any of the details of the foregoing description, unless otherwise specified, but rather should be construed broadly within its spirit and scope as defined in the appended claims, and therefore all changes and modifications that fall within the meets and bounds of the claims, or equivalences of such meets and bounds are therefore intended to be embraced by the appended claims.

## Claims

1. An apparatus for producing ion water, comprising:
an ionization electrolysis cell (100) which has a certain volume for the purpose of ionizing raw water supplied thereto;
an ionization electrode part (200) which is provided at one side of the ionization electrolysis cell (100) and of which either an anode or a cathode comes into direct contact with the raw water;
an ion water control part (310) which controls the ionization electrode part (310) depending on the discharge of the ion water; and
a manipulation part (320) which inputs a user's manipulation signal to the ion water control part (310), and
said ionization electrolysis cell (100) comprising:
an ionization chamber (110) which is formed in a certain shape selected from the group consisting of a rectangular box shape, a polygonal plate shape, a circular plate shape and a cylindrical shape and has a certain volume therein;
a raw water inlet tube (120) which receives raw water via its one side;
an ion water discharge tube (130) which discharges the ionized ion water in the opposite direction of the raw water inlet tube; and
an electrode installation part (140) in which an ionization electrode part (200) is installed with its outer surface being externally exposed at one side in the raw water flow direction from the raw water inlet tube (120) of the ionization chamber (110) to the ion water discharge tube (130); and
said ionization electrode part (200) comprising:
a raw water contact electrode (220) which is engaged coming into close contact with one side of an ion partition (210) formed of either a proton exchange membrane or a polymer electrolyte membrane which allow only ion substances to pass through and comes into contact with the raw water, thus allowing the ion substances to pass through; and
an externally exposed electrode (230) which is engaged coming into close contact with the ion partition (210) at the opposite side of the raw water contact electrode (220) and is externally exposed and is constituted to allow oxygen and ozone or hydrogen gas produced during the ionization procedure to pass through.

2. The apparatus of claim 1, wherein said electrode installation part (140) is installed at both sides for thereby enhancing the ionization of raw water.

3. The apparatus of claim 1, wherein said raw water contact electrode (220) and said externally exposed electrode (230) are formed of either a net shaped plate or a porous plate, and an insulated coating layer (231) is formed at an outer surface of the externally exposed electrode (230) not coming into contact with raw water for thereby preventing oxidation and electric leakage.

4. The apparatus of claim 1, wherein an ozone degradation chamber (410) is disposed at the side of the externally exposed electrode (230) for thereby degrading the ozone to oxygen the ozone being contained in the oxygen discharged via the externally exposed electrode (230) when ion water is used as alkaline water, and an ozone degradation means is provided at the ozone degradation chamber (410).

5. The apparatus of claim 1, wherein said ozone degradation means is formed of one selected from the group consisting of:
an ozone degradation catalyst (421) formed of either manganese oxide and lead compound;
an active carbon (422) which adsorbs ozone and naturally degrades as time passes; and
an ultraviolet ray emitter (423) which emits ozone production ultraviolet ray.
